# EUROPÄISCHE PATENTSCHRIFT

(11) **EP 3 717 758 B1**
(45) Veröffentlichungstag und Bekanntmachung des Hinweises auf die Patenterteilung: **10.01.2024**
(21) Anmeldenummer: 18811753.5
(22) Anmeldetag: 22.11.2018
(51) Int. Cl.: F01P 7/16, F02B 29/04

(54) **ANTRIEBSEINRICHTUNG FÜR EIN KRAFTFAHRZEUG SOWIE VERFAHREN ZUM BETREIBEN EINER ANTRIEBSEINRICHTUNG**
DRIVE UNIT FOR A MOTOR VEHICLE AND METHOD FOR OPERATING A DRIVE UNIT
DISPOSITIF DE PROPULSION POUR UN VÉHICULE AUTOMOBILE, ET PROCÉDÉ POUR FAIRE FONCTIONNER UN DISPOSITIF DE PROPULSION

(30) Priorität: 29.11.2017 DE 102017221471; 31.10.2018 DE 102018218615
(43) Veröffentlichungstag der Anmeldung: 07.10.2020
(73) Patentinhaber: Audi AG, 85057 Ingolstadt (DE)
(72) Erfinder: MEYER, Björn, 30659 Hannover (DE); LEGE, Peer Christopher, 76709 Kronau (DE)
(74) Vertreter: Dietz, Christopher Friedrich
(86) Internationale Anmeldenummer: PCT/EP2018/082139
(87) Internationale Veröffentlichungsnummer: WO 2019/105829

(56) Entgegenhaltungen:
- WO-A1-02/48516
- DE-A1-102011 076 457
- DE-A1-102016 225 094
- US-B2- 8 869 757

## Beschreibung

Die Erfindung betrifft eine Antriebseinrichtung für ein Kraftfahrzeug, mit einem Antriebsaggregat, einem Ladeluftkühler zur Kühlung von dem Antriebsaggregat zuzuführendem Frischgas, einem ersten Kühlmittelkreislauf zur Kühlung des Antriebsaggregats und einem unabhängig von dem ersten Kühlmittelkreislauf betreibbaren zweiten Kühlmittelkreislauf, wobei der erste Kühlmittelkreislauf an einen ersten Kühlmittelkühler angeschlossen ist und der zweite Kühlmittelkreislauf einen zweiten Kühlmittelkühler aufweist, wobei der Ladeluftkühler mit dem ersten Kühlmittelkreislauf und dem zweiten Kühlmittelkreislauf jeweils strömungstechnisch verbindbar ist. Die Erfindung betrifft weiterhin ein Verfahren zum Betreiben einer Antriebseinrichtung für ein Kraftfahrzeug.

Aus dem Stand der Technik ist beispielsweise die Druckschrift DE 10 2014 017 245 A1 bekannt. Diese betrifft ein Kühlsystem für ein Kraftfahrzeug, mit einem Hochtemperaturkühlmittelkreislauf zur Flüssigkeitskühlung wenigstens einer zu kühlenden Hochtemperaturkomponente des Fahrzeugs, und mit einem, eine niedrigere Temperatur als der Hochtemperaturkühlmittelkreislauf aufweisenden Niedrigtemperaturkühlmittelkreislauf zur Flüssigkeitskühlung wenigstens einer zu kühlenden Niedrigtemperaturkomponente des Fahrzeugs. Dabei ist ein, eine niedrigere Temperatur als der Hochtemperaturkühlmittelkreislauf und eine höhere Temperatur als der Niedrigtemperaturkühlmittelkreislauf aufweisender Mitteltemperaturkühlmittelkreislauf vorgesehen, mittels dem wenigstens eine zu kühlende Mitteltemperaturkomponente des Fahrzeugs flüssigkeitskühlbar ist.

Weiterhin beschreibt die Druckschrift DE 10 2013 227 034 A1 ein Thermomanagement für ein Elektro- oder Hybridfahrzeug. Dieses weist einen ersten Kühlmittelkreislauf zur Temperierung von elektrischen Komponenten eines elektrischen Antriebsstrangs auf, wobei zur Konditionierung eines Innenraums eine Konditioniereinheit angeordnet ist. Weiterhin ist ein zweiter Kühlkreislauf zur Konditionierung des Innenraums ausgebildet, welcher unabhängig vom ersten Kühlkreislauf betreibbar ist.

Jeder der Kühlkreisläufe umfasst eine Pumpe sowie jeweils einen Umgebungswärmetauscher. Zur Temperierung des Innenraums ist in den zweiten Kühlkreislauf eine Temperiervorrichtung integriert, welche zum Heizen nach Art einer Wärmepumpe arbeitet. Weiterhin sind die beiden Kühlkreisläufe zur Wärmeübertragung miteinander koppelbar. Bevorzugt ist zur dezentralen Konditionierung einer Innenraumkomponente eine weitere Temperiervorrichtung integriert. Weiterhin ist vorzugsweise zur ergänzenden Unterstützung ein kraftstoffbetriebener Brenner vorgesehen.

Aus der Druckschrift DE 10 2017 123 064 A1 ist eine Verbrennungskraftmaschine mit Ladeluftkühler bekannt. Diese umfasst einen Niedertemperaturkreislauf, der mit dem Ladeluftkühler zum Kühlen der Ladeluft verbunden ist, und einen Hochtemperaturkreislauf, der mit dem Ladeluftkühler zum Wärmen der Ladeluft verbunden ist.

Die Druckschrift DE 10 2006 047 518 A1 beschreibt zudem eine Brennkraftmaschine mit einem Wasserkühlsystem, welches einen Niedertemperaturkreislauf aufweist, wobei in dem Niedertemperaturkreislauf ein Niedertemperaturkühler und ein wassergekühlter Ladeluftkühler angeordnet ist. In dem Niedertemperaturkreislauf ist zusätzlich ein wassergekühlter Abgasturbolader angeordnet.

Die Druckschrift DE 10 2011 076 457 A1 beschreibt eine Kühlanordnung mit einem Niedertemperaturkreislauf zur Ladeluftkühlung eines Turboladers einer Brennkraftmaschine und mit einem Motorkühlkreislauf zur Kühlung der Brennkraftmaschine. Ein im Niedertemperaturkreislauf angeordneter Ladeluftkühler ist kühlmitteleingangsseitig über eine erste Ventileinrichtung und kühlmittelausgangsseitig über eine zweite Ventileinrichtung mit dem Niedertemperaturkreislauf oder mit dem Motorkühlkreislauf fluidleitend verbindbar.

Weiterhin ist aus dem Stand der Technik die Druckschrift US 8 869 757 B2 bekannt.

Es ist Aufgabe der Erfindung, eine Antriebseinrichtung für ein Kraftfahrzeug vorzuschlagen, welche gegenüber bekannten Antriebseinrichtungen Vorteile aufweist, insbesondere bei unterschiedlichen Umgebungsbedingungen einen Betrieb mit hervorragendem Wirkungsgrad ermöglicht.

Dies wird erfindungsgemäß mit einer Antriebseinrichtung für ein Kraftfahrzeug mit den Merkmalen des Anspruchs 1 erreicht. Dabei ist vorgesehen, dass der zweite Kühlmittelkreislauf unabhängig von dem Ladeluftkühler zur Kühlung einer zu kühlenden Einrichtung betreibbar ist, und dass ein Kühlmittelausgang des Ladeluftkühlers an den ersten Kühlmittelkreislauf und den zweiten Kühlmittelkreislauf angeschlossen ist.

Die Antriebseinrichtung dient dem Antreiben des Kraftfahrzeugs, insoweit also dem Bereitstellen eines auf das Antreiben des Kraftfahrzeugs gerichteten Drehmoments. Hierzu verfügt die Antriebseinrichtung über das Antriebsaggregat, welches das Drehmoment schlussendlich bereitstellt beziehungsweise bereitstellen kann. Während eines Betriebs des Antriebsaggregats fällt in diesem Wärme an, welche zumindest zeitweise abgeführt wird.

Hierzu ist der erste Kühlmittelkreislauf vorgesehen, der zur Kühlung beziehungsweise Temperierung des Antriebsaggregats dient. In dem ersten Kühlmittelkreislauf wird zumindest zeitweise ein Kühlmittel umgewälzt und hierbei dem Antriebsaggregat beziehungsweise einem Wärmetauscher des Antriebsaggregats zugeführt. Bei dem Durchströmen des Antriebsaggregats nimmt das Kühlmittel einen Teil der in diesem anfallenden Wärme auf und führt sie aus dem Antriebsaggregat ab. Hieraus resultiert eine Temperaturerhöhung des Kühlmittels.

Aus diesem Grund ist dem ersten Kühlmittelkreislauf der erste Kühlmittelkühler zugeordnet, welchem zumindest zeitweise das erwärmte Kühlmittel zugeführt wird. Die in dem Kühlmittel enthaltene Wärme wird mithilfe des Kühlmittelkühlers abgeführt, die von dem Kühlmittel aufgenommene Wärme oder zumindest ein Teil von dieser also aus dem Kühlmittel ausgetragen, beispielsweise in Richtung einer Außenumgebung. Der erste Kühlmittelkühler ist bevorzugt als direkter Kühlmittelkühler ausgestaltet, kann jedoch alternativ auch als indirekter Kühlmittelkühler vorliegen.

Zusätzlich zu dem ersten Kühlmittelkreislauf liegt der zweite Kühlmittelkreislauf vor, welcher dem Kühlen der zu kühlenden Einrichtung dient. Die kühlende Einrichtung weist vorzugsweise eine Betriebstemperatur auf, welche von der Betriebstemperatur des Antriebsaggregats verschieden ist, insbesondere geringer ist. Beispielsweise ist das Antriebsaggregat als Brennkraftmaschine ausgestaltet, sodass eine Betriebstemperatur zwischen 80 °C und 120 °C vorliegt, um einen möglichst geringen Verbrauch und/oder ein möglichst gutes Emissionsverhalten des Antriebsaggregats umzusetzen. Bei einer solchen Betriebstemperatur sind eine gleichmäßige Durchwärmung von mechanischen Bauteilen des Antriebsaggregats sowie eine möglichst hohe Motoröltemperatur gewährleistet. Beides hat einen positiven Einfluss auf die innere Reibung des Antriebsaggregats und senkt damit den Kraftstoffverbrauch.

Weil die Antriebseinrichtung jedoch über die zu kühlende Einrichtung verfügt, welche eine geringere Betriebstemperatur aufweist als das Antriebsaggregat, ist der zweite Kühlmittelkreislauf realisiert. Der zweite Kühlmittelkreislauf ist unabhängig von dem ersten Kühlmittelkreislauf betreibbar. Darunter ist zu verstehen, dass das Kühlmittel in dem zweiten Kühlmittelkreislauf auch bei in dem ersten Kühlmittelkreislauf stehendem Kühlmittel umgewälzt und zur Kühlung der zu kühlenden Einrichtung herangezogen werden kann. Umgekehrt ist auch bei in dem zweiten Kühlmittelkreislauf stehendem Kühlmittel das Kühlmittel in dem ersten Kühlmittelkreislauf zum Kühlen des Antriebsaggregats umwälzbar. Um das Betreiben der beiden Kühlmittelkreisläufe, also des ersten Kühlmittelkreislaufs und des zweiten Kühlmittelkreislaufs, vollständig unabhängig voneinander zu ermöglichen, sind zwei Kühlmittelkühler vorgesehen, nämlich der erste Kühlmittelkühler und der zweite Kühlmittelkühler. Der erste Kühlmittelkreislauf ist an den ersten Kühlmittelkühler angeschlossen. Der zweite Kühlmittelkühler ist hingegen Bestandteil des zweiten Kühlmittelkreislaufs. Das bedeutet, dass der erste Kühlmittelkühler dem ersten Kühlmittelkreislauf zugeordnet und an diesen strömungstechnisch angeschlossen ist.

Der erste Kühlmittelkühler wird vorzugsweise während eines Betriebs des ersten Kühlmittelkreislaufs jedoch nicht zwingend von Kühlmittel durchströmt. In dem ersten Kühlmittelkreislauf ist insoweit auch Kühlmittel umwälzbar, ohne dass dieses durch den ersten Kühlmittelkühler fließt. Es kann jedoch auch vorgesehen sein, dass bei einem Umwälzen von Kühlmittel in dem ersten Kühlmittelkreislauf das Kühlmittel stets den ersten Kühlmittelkühler durchströmt. Der zweite Kühlmittelkühler ist fester Bestandteil des zweiten Kühlmittelkreislaufs. Bei einem Umwälzen von Kühlmittel in dem zweiten Kühlmittelkreislauf strömt das Kühlmittel insoweit stets durch den zweiten Kühlmittelkühler.

Der erste Kühlmittelkreislauf ist vorzugsweise als Hochtemperaturkreislauf und der zweite Kühlmittelkreislauf als Niedertemperaturkreislauf ausgebildet. Insoweit wird das Kühlmittel in dem ersten Kühlmittelkreislauf während eines stationären beziehungsweise quasi stationären Betriebs der Antriebseinrichtung auf einer ersten Temperatur gehalten, welche höher ist als eine zweite Temperatur, auf welcher das Kühlmittel des zweiten Kühlmittelkreislaufs in dem stationären beziehungsweise quasi stationären Betrieb gehalten wird. Die unterschiedlichen Temperaturen sind durch die unterschiedlichen Betriebstemperaturen des Antriebsaggregats und der zu kühlenden Einrichtung bedingt. Das in dem zweiten Kühlmittelkreislauf umgewälzte Kühlmittel wird der zu kühlenden Einrichtung zugeführt, um diese zu kühlen. Stromabwärts der zu kühlenden Einrichtung wird das Kühlmittel dem zweiten Kühlmittelkühler zugeführt.

Die Antriebseinrichtung verfügt zusätzlich über den Ladeluftkühler. Dieser dient der Kühlung von Frischgas, welches dem Antriebsaggregat zugeführt werden soll. Beispielsweise ist der Ladeluftkühler insoweit strömungstechnisch bezüglich des Frischgases gesehen zwischen einem Verdichter und dem Antriebsaggregat angeordnet. Der Verdichter ist beispielsweise Bestandteil eines Abgasturboladers. Er kann jedoch auch elektrisch oder von dem Antriebsaggregat angetrieben sein.

Das dem Antriebsaggregat zuzuführende Frischgas kann in Form von Frischluft vorliegen oder alternativ als Frischluft-Abgas-Gemisch, falls das Antriebsaggregat über eine Abgasrückführung verfügt. Je geringer die Temperatur des dem Antriebsaggregat zugeführten Frischgas ist, umso höher sind die Leistung und/oder der Wirkungsgrad des Antriebsaggregats, weil bei einer geringeren Temperatur das dem Antriebsaggregat zugeführte Frischgasvolumen eine höhere Frischgasmasse aufweist. Entsprechend kann in dem Antriebsaggregat mit demselben Frischgasvolumen eine größere Menge an Kraftstoff verbrannt werden.

Hieraus ergibt sich, dass es vorteilhaft ist, den Ladeluftkühler mit Kühlmittel zu beaufschlagen, welches eine möglichst geringe Temperatur aufweist. Aus diesem Grund ist der Ladeluftkühler zunächst mit dem zweiten Kühlmittelkreislauf verbunden beziehungsweise strömungstechnisch an diesen angeschlossen. Beispielsweise während eines Warmlaufbetriebs der Antriebseinrichtung kann es jedoch vorteilhaft sein, dem Antriebsaggregat vorgeheiztes Frischgas zuzuführen, anstatt das Frischgas vor dem Zuführen zu kühlen. Aus diesem Grund ist der Ladeluftkühler der beschriebenen Antriebseinrichtung zusätzlich an den ersten Kühlmittelkreislauf strömungstechnisch angeschlossen.

Das bedeutet schlussendlich, dass der Ladeluftkühler mit dem ersten Kühlmittelkreislauf und dem zweiten Kühlmittelkreislauf jeweils strömungstechnisch verbindbar ist. Hierunter ist zu verstehen, dass dem Ladeluftkühler Kühlmittel aus dem ersten Kühlmittelkreislauf, Kühlmittel aus dem zweiten Kühlmittelkreislauf oder ein Gemisch von Kühlmittel aus dem ersten Kühlmittelkreislauf und Kühlmittel aus dem zweiten Kühlmittelkreislauf zugeführt werden kann.

Das wiederum bedeutet, dass in einer ersten Betriebsart der Ladeluftkühler sowohl von dem ersten Kühlmittelkreislauf als auch von dem zweiten Kühlmittelkreislauf strömungstechnisch getrennt ist. In einer zweiten Betriebsart ist der Ladeluftkühler mit dem ersten Kühlmittelkreislauf strömungstechnisch verbunden und von dem zweiten Kühlmittelkreislauf strömungstechnisch getrennt. In einer dritten Betriebsart ist der Ladeluftkühler von dem ersten Kühlmittelkreislauf strömungstechnisch getrennt und mit dem zweiten Kühlmittelkreislauf strömungstechnisch verbunden. In einer vierten Betriebsart ist der Ladeluftkühler sowohl mit dem ersten Kühlmittelkreislauf als auch mit dem zweiten Kühlmittelkreislauf strömungstechnisch verbunden.

In der zweiten Betriebsart weist das dem Ladeluftkühler zugeführte Kühlmittel eine Temperatur auf, die der Temperatur des Kühlmittels in dem ersten Kühlmittelkreislauf entspricht und die vorzugsweise von der Temperatur des Kühlmittels in dem zweiten Kühlmittelkreislauf verschieden ist. Eine Durchströmungsquerschnittsfläche zwischen dem ersten Kühlmittelkreislauf und dem Ladeluftkühler ist insoweit größer als null, eine Durchströmungsquerschnittsfläche zwischen dem zweiten Kühlmittelkreislauf und dem Ladeluftkühler gleich null. Analog hierzu weist in der dritten Betriebsart das dem Ladeluftkühler zugeführte Kühlmittel eine Temperatur auf, die der Temperatur des Kühlmittels in dem zweiten Kühlmittelkreislauf entspricht und die vorzugsweise von der Temperatur des Kühlmittels in dem ersten Kühlmittelkreislauf verschieden ist. Die Durchströmungsquerschnittsfläche zwischen dem ersten Kühlmittelkreislauf und dem Ladeluftkühler ist also gleich null, die Durchströmungsquerschnittsfläche zwischen dem zweiten Kühlmittelkreislauf und dem Ladeluftkühler größer als null.

Besonders bevorzugt ist es in der vierten Betriebsart vorgesehen, den Ladeluftkühler mit einer bestimmten ersten Durchströmungsquerschnittsfläche mit dem ersten Kühlmittelkreislauf und mit einer bestimmten zweiten Durchströmungsquerschnittsfläche mit dem zweiten Kühlmittelkreislauf zu verbinden, wobei beide Durchströmungsquerschnittsflächen von null verschieden sind, sodass dem Ladeluftkühler Kühlmittel sowohl aus dem ersten Kühlmittelkreislauf als auch als dem zweiten Kühlmittelkreislauf zugeführt wird. Die Durchströmungsquerschnittsflächen werden vorzugsweise derart eingestellt, dass das dem Ladeluftkühler insgesamt zugeführte Kühlmittel eine bestimmte Temperatur aufweist. Das Einstellen kann steuernd und/oder regelnd erfolgen.

Beispielsweise werden das Kühlmittel aus dem ersten Kühlmittelkreislauf und das Kühlmittel aus dem zweiten Kühlmittelkreislauf stromaufwärts von dem Ladeluftkühler zusammengeführt und das zusammengeführte Kühlmittel dem Ladeluftkühler zugeführt. Die Temperatur des zusammengeführten Kühlmittels wird vorzugsweise durch Einstellen der Durchströmungsquerschnittsflächen auf eine Solltemperatur eingestellt, die von der Temperatur des Kühlmittels in dem ersten Kühlmittelkreislauf und von der Temperatur des Kühlmittels in dem zweiten Kühlmittelkreislauf vorzugsweise jeweils verschieden sein kann.

Beispielsweise ist es vorgesehen, den Ladeluftkühler während des Warmlaufbetriebs, also bis eine Temperatur eine Betriebstemperatur erreicht hat, strömungstechnisch mit dem ersten Kühlmittelkreislauf zu verbinden. Hat die Temperatur die Betriebstemperatur erreicht, so kann der Ladeluftkühler strömungstechnisch von dem ersten Kühlmittelkreislauf getrennt und stattdessen mit dem zweiten Kühlmittelkreislauf strömungstechnisch verbunden werden. In jedem Fall ist jedoch der zweite Kühlmittelkreislauf unabhängig von dem ersten Kühlmittelkreislauf und auch unabhängig von dem Ladeluftkühler betreibbar. Das bedeutet, dass in dem zweiten Kühlmittelkreislauf Kühlmittel derart umwälzbar ist, dass es an dem Ladeluftkühler vorbeigeführt wird beziehungsweise nicht zu dem Ladeluftkühler gelangt.

Die Temperatur und die Betriebstemperatur sind beispielsweise dem Antriebsaggregat zugeordnet. Es kann jedoch auch vorgesehen sein, dass sie einer Abgasreinigungseinrichtung der Antriebseinrichtung zugeordnet sind, die dem Reinigen von Abgas des Antriebsaggregats dient. Der Abgasreinigungseinrichtung wird das von dem Antriebsaggregat zugeführte Abgas zugeführt. Die Abgasreinigungseinrichtung liegt beispielsweise als Katalysator oder dergleichen vor.

Entspricht die Temperatur der Abgasreinigungseinrichtung ihrer Betriebstemperatur, so kann eine sehr effiziente Reinigung des Abgases durchgeführt werden. Entsprechend soll mithilfe der wie beschrieben ausgestalteten Antriebseinrichtung die Temperatur der Abgasreinigungseinrichtung beziehungsweise des Antriebsaggregats möglichst rasch auf die jeweilige Betriebstemperatur gebracht werden. Das Antriebsaggregat liegt beispielsweise in Form einer Brennkraftmaschine, insbesondere einer Dieselbrennkraftmaschine, vor. Auch eine Ausgestaltung als Ottobrennkraftmaschine kann jedoch realisiert sein.

Die beschriebene Ausgestaltung der Antriebseinrichtung hat den Vorteil, dass unabhängig von Umgebungsbedingungen die Temperatur der Abgasreinigungseinrichtung oder des Antriebsaggregats sehr schnell in Richtung der jeweiligen Betriebstemperatur erhöht werden kann. Entsprechend kann das von dem Antriebsaggregat erzeugte Abgas effizient von Schadstoffen befreit werden beziehungsweise ist ein effizienter Betrieb des Antriebsaggregats sichergestellt. Dies wird insbesondere durch das beschriebene, besonders flexible Einstellen der verschiedenen Betriebsarten erzielt, wobei die Durchströmungsquerschnittsflächen zwischen dem ersten Kühlmittelkreislauf und dem zweiten Kühlmittelkreislauf einerseits und dem Ladeluftkühler andererseits frei wählbar einstellbar sind.

Eine weitere bevorzugte Ausgestaltung der Erfindung sieht vor, dass der erste Kühlmittelkreislauf über ein erstes Stellventil an den ersten Kühlmittelkühler angeschlossen ist, sodass dem Antriebsaggregat in unterschiedlichen Betriebsarten unterschiedliche Mengen von mittels des ersten Kühlmittelkühlers gekühltem Kühlmittel zuführbar ist. Insbesondere während eines Warmlaufbetriebs des Antriebsaggregats, während dem das Antriebsaggregat eine Temperatur aufweist, die kleiner ist als seine Betriebstemperatur, soll das Kühlmittel nicht oder lediglich geringfügig mithilfe des ersten Kühlmittelkühlers gekühlt werden. Weist das Antriebsaggregat hingegen eine Temperatur auf, die seiner Betriebstemperatur entspricht oder sogar größer ist, so soll die Wärme mithilfe des ersten Kühlmittelkühlers abgeführt werden, sodass das Kühlmittel zum effektiven Kühlen des Antriebsaggregats herangezogen werden kann. Hierzu ist der erste Kühlmittelkreislauf über das erste Stellventil an dem ersten Kühlmittelkühler angeschlossen.

Mithilfe des ersten Stellventils kann eingestellt werden, welcher Anteil des dem Antriebsaggregat zugeführten Kühlmittels mithilfe des ersten Kühlmittelkühlers gekühlt ist. In unterschiedlichen Betriebsarten der Antriebseinrichtung werden insoweit unterschiedliche Mengen von mittels des ersten Kühlmittelkühlers gekühltem Kühlmittel dem Antriebsaggregat zugeführt. Beispielsweise ist es in einer ersten Betriebsart vorgesehen, den ersten Kühlmittelkreislauf mittels des ersten Stellventils von dem ersten Kühlmittelkühler zu entkoppeln, sodass das dem Antriebsaggregat zugeführte Kühlmittel ausschließlich innerhalb des ersten Kühlmittelkreislaufs umgewälzt wird. Hierdurch kann eine rasche Erwärmung des Kühlmittels sichergestellt werden. In einer zweiten Betriebsart kann es hingegen vorgesehen sein, zumindest einen Teil des dem Antriebsaggregat zugeführten Kühlmittels, vorzugsweise das gesamte dem Antriebsaggregat zugeführte Kühlmittel, durch den ersten Kühlmittelkühler zu führen.

Im Rahmen einer weiteren Ausführungsform der Erfindung kann vorgesehen sein, dass ein Kühlmittelauslass des ersten Kühlmittelkühlers über eine Kühlmittelvorlaufleitung und das erste Stellventil an den ersten Kühlmittelkreislauf und eine Kühlmittelrückführleitung einerseits an den ersten Kühlmittelkreislauf und andererseits an einen Kühlmitteleinlass des ersten Kühlmittelkühlers angeschlossen ist. Strömungstechnisch ist der erste Kühlmittelkreislauf über die Kühlmittelvorlaufleitung sowie die Kühlmittelrücklaufleitung an den ersten Kühlmittelkühler angeschlossen. Hierbei ist die Kühlmittelvorlaufleitung einerseits an den Kühlmittelauslass und andererseits an den ersten Kühlmittelkreislauf angeschlossen.

Die Kühlmittelrücklaufleitung hingegen ist einerseits an den ersten Kühlmittelkreislauf und andererseits an den Kühlmitteleinlass des ersten Kühlmittelkühlers angeschlossen. Zumindest zeitweise wird dem ersten Kühlmittelkühler über die Kühlmittelrücklaufleitung Kühlmittel aus dem ersten Kühlmittelkreislauf zugeführt und über die Kühlmittelvorlaufleitung aus dem ersten Kühlmittelkühler in Richtung des ersten Kühlmittelkreislaufs entnommen. Das dem ersten Kühlmittelkühler zugeführte Kühlmittel durchströmt insoweit den ersten Kühlmittelkühler von dem Kühlmitteleinlass bis hin zu dem Kühlmittelauslass.

Eine besonders bevorzugte weitere Ausgestaltung der Erfindung sieht vor, dass ein Kühlmitteleingang des Ladeluftkühlers über ein zweites Stellventil stromabwärts des Antriebsaggregats an den ersten Kühlmittelkreislauf oder die Kühlmittelrückführleitung und stromabwärts des zweiten Kühlmittelkühlers an den zweiten Kühlmittelkreislauf angeschlossen ist. Der Ladeluftkühler weist den Kühlmitteleingang sowie einen Kühlmittelausgang auf. Durch den Kühlmitteleingang wird dem Ladeluftkühler Kühlmittel zugeführt und durch den Kühlmittelausgang entnommen. Innerhalb des Ladeluftkühlers stehen der Kühlmitteleingang und der Kühlmittelausgang in unmittelbarer Strömungsverbindung miteinander. Es ist also vorgesehen, dass das gesamte durch den Kühlmitteleingang zugeführte Kühlmittel nachfolgend durch den Kühlmittelausgang austritt.

Der Kühlmitteleingang des Ladeluftkühlers ist an das zweite Stellventil angeschlossen. Das zweite Stellventil ist wiederum auf seiner dem Kühlmitteleingang strömungstechnisch abgewandten Seite an den ersten Kühlmittelkreislauf oder die Kühlmittelrückführleitung angeschlossen, über welche der erste Kühlmittelkreislauf mit dem ersten Kühlmittelkühler strömungsverbunden ist.

Das bedeutet, dass dem Ladeluftkühler Kühlmittel zugeführt werden kann, welches in dem ersten Kühlmittelkreislauf umgewälzt wird oder über die Kühlmittelrückführleitung aus dem ersten Kühlmittelkreislauf in Richtung des ersten Kühlmittelkühlers strömt. Vorzugsweise hat das dem Ladeluftkühler zugeführte Kühlmittel bereits Wärme des Antriebsaggregats aufgenommen. Hierzu ist das zweite Stellventil stromabwärts des Antriebsaggregats an den ersten Kühlmittelkreislauf angeschlossen.

Zusätzlich ist das zweite Stellventil auf seiner dem Kühlmitteleingang des Ladeluftkühlers abgewandten Seite an den zweiten Kühlmittelkreislauf angeschlossen, nämlich stromabwärts des zweiten Kühlmittelkühlers. Entsprechend kann über das zweite Stellventil dem Kühlmitteleingang des Ladeluftkühlers Kühlmittel zugeführt werden, welches dem ersten Kühlmittelkreislauf oder dem zweiten Kühlmittelkreislauf entnommen wird.

Das dem ersten Kühlmittelkreislauf entnommene Kühlmittel wird also dort entnommen, wo die höchste Temperatur zu erwarten ist, nämlich stromabwärts des Antriebsaggregats oder in der Kühlmittelrückführleitung. Das dem zweiten Kühlmittelkreislauf entnommene Kühlmittel wird hingegen dort entnommen, wo die geringste Temperatur zu erwarten ist, nämlich stromabwärts des zweiten Kühlmittelkühlers. Das dem ersten Kühlmittelkreislauf entnommene Kühlmittel kann insoweit zum Vorheizen des Frischgases und das dem zweiten Kühlmittelkreislauf entnommene Kühlmittel zum Kühlen des Frischgases herangezogen werden.

Das zweite Stellventil ist derart ausgestaltet, dass der Kühlmitteleingang des Ladeluftkühlers entweder mit dem ersten Kühlmittelkreislauf oder dem zweiten Kühlmittelkreislauf in Strömungsverbindung steht. Es kann auch vorgesehen sein, dass das zweite Stellventil ein vollständiges Entkoppeln des Kühlmitteleingangs des Ladeluftkühlers von dem ersten Kühlmittelkreislauf und dem zweiten Kühlmittelkreislauf ermöglicht. In diesem Fall wird der Ladeluftkühler nicht von Kühlmittel durchströmt, vielmehr steht das Kühlmittel in dem Ladeluftkühler.

Bevorzugt ist das zweite Stellventil als Mischventil ausgestaltet, sodass das dem Ladeluftkühler zugeführte Kühlmittel sich aus Kühlmittel zusammensetzt, welches sowohl dem ersten Kühlmittelkreislauf als auch dem zweiten Kühlmittelkreislauf entnommen ist. Beispielsweise wird das dem Ladeluftkühler zugeführte Kühlmittel aus dem Kühlmittel des ersten Kühlmittelkreislaufs und dem zweiten Kühlmittelkreislauf derart zusammengestellt, dass es eine bestimmte Temperatur aufweist. Insoweit wird die Temperatur des dem Ladeluftkühler zugeführten Kühlmittels auf eine bestimmte Temperatur eingestellt, insbesondere steuernd und/oder regelnd, nämlich durch entsprechendes Ansteuern des zweiten Stellventils. Eine derartige Ausgestaltung ermöglicht ein besonders effizientes Betreiben der Antriebseinrichtung.

Die Erfindung sieht vor, dass ein Kühlmittelausgang des Ladeluftkühlers an den ersten Kühlmittelkreislauf und den zweiten Kühlmittelkreislauf angeschlossen ist. Das dem Ladeluftkühler zugeführte Kühlmittel wird dem ersten Kühlmittelkreislauf und/oder dem zweiten Kühlmittelkreislauf entnommen. Entsprechend ist es notwendig, das Kühlmittel nach dem Durchlaufen des Ladeluftkühlers wieder zumindest einem der Kühlmittelkreisläufe zuzuführen. Hierzu ist der Kühlmittelausgang an beide Kühlmittelkreisläufe angeschlossen.

Vorzugsweise ist der Kühlmittelausgang des Ladeluftkühlers strömungstechnisch parallel sowohl an den ersten Kühlmittelkreislauf als auch an den zweiten Kühlmittelkreislauf angeschlossen, sodass das dem jeweiligen Kühlmittel entnommene Kühlmittel oder zumindest eine entsprechende Menge an Kühlmittel nach dem Durchlaufen des Ladeluftkühlers wieder in den jeweiligen Kühlmittelkreislauf gelangen kann. Besonders bevorzugt ist der Kühlmittelausgang des Ladeluftkühlers über eine Verbindungsleitung und/oder die Kühlmittelvorlaufleitung an den ersten Kühlmittelkreislauf angeschlossen. Das aus dem Ladeluftkühler austretende Kühlmittel wird im Falle der Kühlmittelvorlaufleitung also mit Kühlmittel vermengt, welches von dem ersten Kühlmittelkühler in Richtung des ersten Kühlmittelkreislaufs strömt. Die beschriebene Ausgestaltung hat den Vorteil, dass mit einer vergleichsweise einfachen strömungstechnischen Verschaltung eine hohe Flexibilität realisiert ist.

In einer besonders bevorzugten Ausgestaltung kann vorgesehen sein, dass der Kühlmittelausgang des Ladeluftkühlers über ein Stellventil an den ersten Kühlmittelkreislauf und den zweiten Kühlmittelkreislauf angeschlossen ist. Das Stellventil kann als 3/2-Wegeventil ausgebildet sein. In einer ersten Schaltstellung des Stellventils ist eine Strömungsverbindung zwischen dem Kühlmittelausgang des Ladeluftkühlers und dem ersten Kühlmittelkreislauf hergestellt und eine Strömungsverbindung zwischen dem Kühlmittelausgang und dem zweiten Kühlmittelkreislauf unterbrochen. In einer zweiten Schaltstellung des Stellventils ist die Strömungsverbindung zwischen dem Kühlmittelausgang und dem zweiten Kühlmittelkreislauf hergestellt und die Strömungsverbindung zwischen dem Kühlmittelausgang und dem zweiten Kühlmittelkreislauf unterbrochen.

Das Stellventil wird vorzugsweise in Abhängigkeit von der Temperatur des Kühlmittels an dem Kühlmittelausgang angesteuert. Bei einer Temperatur oberhalb einer Temperaturschwelle wird die erste Schaltstellung und bei einer Temperatur von höchstens der Temperaturschwelle die zweite Schaltstellung eingestellt. Das Kühlmittel wird also stets demjenigen Kühlkreislauf zugeführt, in welchem eine Temperatur vorliegt, die der Temperatur des Kühlmittels an dem Kühlmittelausgang näher liegt.

Eine Weiterbildung der Erfindung sieht vor, dass der Kühlmittelausgang über eine zwischen dem ersten Stellventil und einer Kühlmittelpumpe des ersten Kühlmittelkreislaufs in den ersten Kühlmittelkreislauf einmündende Verbindungsleitung und/oder über die Kühlmittelvorlaufleitung an den ersten Kühlmittelkreislauf angeschlossen ist. Hierauf wurde vorstehend bereits hingewiesen. Das Anschließen des Kühlmittelausgangs an den ersten Kühlmittelkreislauf über die Kühlmittelvorlaufleitung bedeutet schlussendlich, dass der Kühlmittelausgang über das erste Stellventil an den ersten Kühlmittelkreislauf angeschlossen ist. Alternativ kann es selbstverständlich vorgesehen sein, dass der Kühlmittelausgang unmittelbar an den ersten Kühlmittelkreislauf angeschlossen ist, insbesondere stromabwärts des ersten Stellventils, beispielsweise strömungstechnisch zwischen dem ersten Stellventil und dem Antriebsaggregat. Hierzu ist vorzugsweise die Verbindungsleitung vorgesehen. Die beschriebene Verschaltung ermöglicht ein einfaches Rückführen des aus dem ersten Kühlmittelkreislauf und/oder dem zweiten Kühlmittelkreislauf entnommenen Kühlmittels.

Im Rahmen einer weiteren Ausgestaltung der Erfindung ist vorgesehen, dass in dem zweiten Kühlmittelkreislauf ein drittes Schaltventil zur Überbrückung des zweiten Kühlmittelkühlers angeordnet ist, das eingangsseitig an den Kühlmittelausgang angeschlossen ist. Das dritte Schaltventil ist vorzugsweise als 3/2-Wegeventil ausgebildet. Ein Eingang des dritten Schaltventils ist strömungstechnisch an den Kühlmittelausgang des Ladeluftkühlers angeschlossen. Ein erster Ausgang ist hingegen an einen Einlass des zweiten Kühlmittelkühlers, also stromaufwärts des zweiten Kühlmittelkühlers, und ein zweiter Ausgang an einen Auslass des zweiten Kühlmittelkühlers, also stromabwärts des zweiten Kühlmittelkühlers, angeschlossen.

In einer ersten Schaltstellung des dritten Schaltventils liegt eine Strömungsverbindung zwischen dem Eingang und dem ersten Auslass vor, wohingegen eine Strömungsverbindung zwischen dem Eingang und dem zweiten Auslass unterbrochen ist. In einer zweiten Schaltstellung ist die Strömungsverbindung zwischen dem Eingang und dem ersten Auslass unterbrochen und die Strömungsverbindung zwischen dem Eingang und dem zweiten Auslass hergestellt. In anderen Worten wird das an dem Einlass anliegende Kühlmittel bei der ersten Schaltstellung durch den zweiten Kühlmittelkühler und bei der zweiten Schaltstellung um den zweiten Kühlmittelkühler herum geführt.

Bevorzugt weist das dritte Schaltventil wenigstens eine Zwischenstellung auf, die zwischen der ersten Schaltstellung und der zweiten Schaltstellung liegt. In der Zwischenstellung liegt entsprechend eine Strömungsverbindung zwischen dem Eingang und sowohl dem ersten Ausgang als auch dem zweiten Ausgang vor, sodass das an dem Eingang vorliegende Kühlmittel auf den ersten Ausgang und den zweiten Ausgang aufgeteilt wird. Entsprechend wird ein Teil des Kühlmittels dem ersten Ausgang und ein anderer Teil dem zweiten Ausgang zugeführt.

Besonders bevorzugt sind mehrere derartige Zwischenstellungen vorgesehen, die sich hinsichtlich der Durchströmungsquerschnittsfläche zwischen dem Eingang und den beiden Ausgängen unterscheiden. Für unterschiedliche Zwischenstellungen liegen insoweit unterschiedliche Durchströmungsquerschnittsflächen vor. Je größer die Durchströmungsquerschnittsfläche des dritten Schaltventils zwischen dem Eingang und dem ersten Ausgang für die unterschiedlichen Zwischenstellungen ist, umso kleiner ist die Durchströmungsquerschnittsfläche zwischen dem Eingang und dem zweiten Ausgang. Beispielsweise ist das dritte Schaltventil als Stetigventil ausgeführt, insbesondere als Proportionalventil, als Regelventil oder als Servoventil.

Zusätzlich oder alternativ zu der ersten Schaltstellung oder der zweiten Schaltstellung kann eine - rein optionale - dritte Schaltstellung des dritten Schaltventils vorliegen, in der die Strömungsverbindung durch das dritte Schaltventil unterbrochen ist. Bei Vorliegen dieser dritten Schaltstellung gelangt das Kühlmittel beispielsweise durch die Verbindungsleitung in den ersten Kühlmittelkreislauf. Der zweite Kühlmittelkreislauf ist in diesem Fall deaktiviert, sodass auch die Kühlmittelpumpt des zweiten Kühlmittelkreislaufs abgeschaltet sein beziehungsweise abgeschaltet werden kann.

Eine bevorzugte weitere Ausgestaltung der Erfindung sieht vor, dass der Ladeluftkühler strömungstechnisch parallel zu der zu kühlenden Einrichtung an den zweiten Kühlmittelkreislauf angeschlossen ist. Das bedeutet schlussendlich, dass das dem zweiten Kühlmittelkreislauf für den Ladeluftkühler entnommene Kühlmittel stromaufwärts der zu kühlenden Einrichtung aus dem zweiten Kühlmittelkreislauf entnommen und nach dem Durchströmen des Ladeluftkühlers stromabwärts der zu kühlenden Einrichtung zurückgeführt wird. Entsprechend wird die zu kühlende Einrichtung beziehungsweise die Kühlung der zu kühlenden Einrichtung nicht durch den Ladeluftkühler beeinträchtigt.

Im Rahmen einer weiteren bevorzugten Ausgestaltung der Erfindung kann vorgesehen sein, dass das zweite Stellventil temperaturgesteuert und/oder -geregelt ist. Vorstehend wurde bereits darauf hingewiesen, dass es wahlweise vorgesehen sein kann, dass Frischgas mittels des Ladeluftkühlers entweder vorzuheizen oder abzukühlen. Dies wird beispielsweise in Abhängigkeit von der Temperatur, insbesondere des Antriebsaggregats oder der Abgasnachbehandlungseinrichtung, durchgeführt. Hierzu dient das zweite Stellventil.

Beispielsweise ist das zweite Stellventil ein elektromechanisches Stellventil, welches in Abhängigkeit von der Temperatur steuernd und/oder regelnd eingestellt wird. Es kann jedoch auch vorgesehen sein, dass das zweite Stellventil selbststeuernd beziehungsweise selbstregelnd ist. Hierzu kann es beispielsweise über ein Dehnstoffelement verfügen, welches mit einem Ventilelement gekoppelt ist. Das Ventilelement wirkt mit einem Ventilsitz zusammen, um einen gewünschten Durchströmungsquerschnitt zwischen dem ersten Kühlmittelkreislauf und dem zweiten Kühlmittelkreislauf einerseits und dem Ladeluftkühler beziehungsweise seinem Kühlmitteleingang andererseits einzustellen.

Besonders bevorzugt wird das zweite Stellventil in wenigstens einer Betriebsart zum Einstellen beziehungsweise Einregeln der Temperatur des dem Ladeluftkühler zugeführten Kühlmittels auf eine bestimmte Solltemperatur betrieben beziehungsweise angesteuert. Mit einer derartigen Vorgehensweise wird ein besonders effizientes Vorheizen des Frischgases realisiert.

Die Erfindung betrifft weiterhin ein Verfahren zum Betreiben einer Antriebseinrichtung für ein Kraftfahrzeug, insbesondere einer Antriebseinrichtung gemäß den Ausführungen im Rahmen dieser Beschreibung, wobei die Antriebseinrichtung ein Antriebsaggregat, einen Ladeluftkühler zur Kühlung von dem Antriebsaggregat zuzuführendem Frischgas, einen ersten Kühlmittelkreislauf zur Kühlung des Antriebsaggregats und einen unabhängig von dem ersten Kühlmittelkreislauf betreibbaren zweiten Kühlmittelkreislauf aufweist, wobei der erste Kühlmittelkreislauf an einen ersten Kühlmittelkühler angeschlossen ist und der zweite Kühlmittelkreislauf einen zweiten Kühlmittelkühler aufweist. Dabei ist vorgesehen, dass der Ladeluftkühler mit dem ersten Kühlmittelkreislauf und dem zweiten Kühlmittelkreislauf jeweils strömungstechnisch verbunden werden kann, wobei der zweite Kühlmittelkreislauf unabhängig von dem Ladeluftkühler zur Kühlung einer zu kühlenden Einrichtung betreibbar ist, und dass ein Kühlmittelausgang des Ladeluftkühlers an den ersten Kühlmittelkreislauf und den zweiten Kühlmittelkreislauf angeschlossen ist.

Auf die Vorteile einer derartigen Ausgestaltung der Antriebseinrichtung beziehungsweise einer derartigen Vorgehensweise wurde bereits hingewiesen. Sowohl die Antriebseinrichtung als auch das Verfahren zu ihrem Betreiben können gemäß den Ausführungen im Rahmen dieser Beschreibung weitergebildet sein, sodass insoweit auf diese verwiesen wird.

In einer weiteren Ausgestaltung der Erfindung kann vorgesehen sein, dass der Ladeluftkühler in einer ersten Betriebsart strömungstechnisch von dem ersten Kühlmittelkreislauf und dem zweiten Kühlmittelkreislauf entkoppelt, in einer zweiten Betriebsart von dem ersten Kühlmittelkreislauf entkoppelt und mit dem zweiten Kühlmittelkreislauf gekoppelt, in einer dritten Betriebsart mit dem ersten Kühlmittelkreislauf gekoppelt und von dem zweiten Kühlmittelkreislauf entkoppelt, und in einer vierten Betriebsart sowohl mit dem ersten Kühlmittelkreislauf als auch mit dem zweiten Kühlmittelkreislauf gekoppelt ist, wobei aus der ersten Betriebsart, der zweiten Betriebsart, der dritten Betriebsart und der vierten Betriebsart eine Betriebsart ausgewählt und eingestellt wird.

In der ersten Betriebsart steht insoweit bevorzugt das Kühlmittel in dem Ladeluftkühler, sodass seine Temperierungswirkung auf das Frischgas lediglich von seiner Temperatur und seiner thermischen Masse abhängt. In der zweiten Betriebsart soll das dem Antriebsaggregat zugeführte Frischgas möglichst stark gekühlt werden. Hierzu ist der Ladeluftkühler an den zweiten Kühlmittelkreislauf angeschlossen, weil das in diesem vorliegende Kühlmittel eine niedrigere Temperatur aufweist als das Kühlmittel in dem ersten Kühlmittelkreislauf.

In der dritten Betriebsart soll dem Ladeluftkühler ausschließlich Kühlmittel aus dem ersten Kühlmittelkreislauf zugeführt werden. Entsprechend ist ein Vorheizen des Frischgases vorgesehen, wozu die Wärme des Antriebsaggregats selbst unmittelbar herangezogen wird. Die dritte Betriebsart stellt eine Mischform aus der zweiten Betriebsart und der dritten Betriebsart dar.

In der vierten Betriebsart wird das dem Ladeluftkühler zugeführte Kühlmittel aus dem Kühlmittel des ersten Kühlmittelkreislaufs und dem Kühlmittel des zweiten Kühlmittelkreislaufs zusammengestellt, sodass das dem Ladeluftkühler zugeführte Kühlmittel schlussendlich eine Temperatur aufweist, welche zwischen der Temperatur des Kühlmittels aus dem ersten Kühlmittelkreislauf und der Temperatur des Kühlmittels aus dem zweiten Kühlmittelkreislauf aufweist.

Durch entsprechende Wahl einer der Betriebsarten kann ein besonders effizientes Erwärmen der Abgasnachbehandlungseinrichtung und/oder des Antriebsaggregats realisiert werden, sodass eine hohe Effizienz der Abgasreinigung und/oder des Betriebs des Antriebsaggregats vorliegt.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Darstellung einer Antriebseinrichtung für ein Kraftfahrzeug in einer ersten Ausführungsform, mit einem Antriebsaggregat, einem ersten Kühlmittelkreislauf zur Kühlung des Antriebsaggregats sowie einem zweiten Kühlmittelkreislauf zur Kühlung einer zu kühlenden Einrichtung, sowie
- Figur 2: eine schematische Darstellung der Antriebseinrichtung in einer zweiten Ausführungsform.

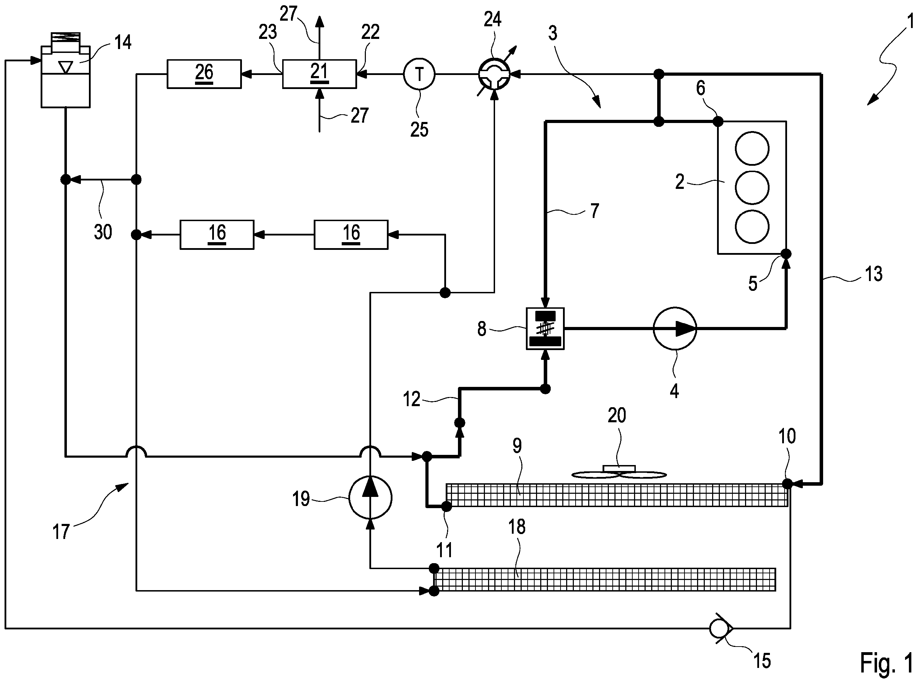

Die Figur 1 zeigt eine schematische Darstellung einer Antriebseinrichtung 1 in einer ersten Ausführungsform, die ein hier als Brennkraftmaschine ausgebildetes Antriebsaggregat 2 aufweist. Zur Kühlung des Antriebsaggregats 2 ist ein erster Kühlmittelkreislauf 3 vorgesehen, in welchem mittels einer Kühlmittelpumpe 4 Kühlmittel umwälzbar ist. Das Antriebsaggregat 2 weist einen Kühlmitteleinlass 5 und einen Kühlmittelauslass 6 auf. Der Kühlmittelauslass 6 ist mit dem Kühlmitteleinlass 5 über eine Kühlmittelleitung 7 strömungstechnisch verbunden, in welcher die Kühlmittelpumpe 4 vorliegt. Der erste Kühlmittelkreislauf 3 ist über ein erstes Stellventil 8 an einen ersten Kühlmittelkühler 9 angeschlossen, dem über einen Kühlmitteleinlass 10 Kühlmittel zuführbar und über einen Kühlmittelauslass 11 entnehmbar ist. Der Kühlmittelkühler 9 ist beispielsweise als direkter Kühlmittelkühler ausgestaltet.

Der Kühlmittelkühler 9 beziehungsweise sein Kühlmittelauslass 11 ist über eine Kühlmittelvorlaufleitung 12 an den ersten Kühlmittelkreislauf 3 angeschlossen. Umgekehrt ist der erste Kühlmittelkreislauf 3 über eine Kühlmittelrücklaufleitung 13 an den Kühlmittelkühler 9 beziehungsweise dessen Kühlmitteleinlass 10 angeschlossen. In dem hier dargestellten Ausführungsbeispiel ist die Kühlmittelvorlaufleitung 12 über das erste Stellventil 8 an den ersten Kühlmittelkreislauf 3 beziehungsweise die Kühlmittelleitung 7 angeschlossen. Die Kühlmittelrücklaufleitung 13 ist hingegen unmittelbar an den ersten Kühlmittelkreislauf 3 angeschlossen beziehungsweise mündet unmittelbar aus der Kühlmittelleitung 7 aus.

Zum Füllstandsausgleich ist ein Ausgleichsbehälter 14 vorgesehen, der einerseits an die Kühlmittelrücklaufleitung 13 und andererseits an die Kühlmittelvorlaufleitung 12 angeschlossen ist. Vorzugsweise ist er an die Kühlmittelrücklaufleitung 13 über ein Rückschlagventil 15 angeschlossen, welches lediglich eine Strömung von der Kühlmittelrücklaufleitung 13 in Richtung des Ausgleichsbehälters 14 zulässt, eine Strömung in die Gegenrichtung jedoch unterbindet.

Die Antriebseinrichtung 1 verfügt über wenigstens eine zu kühlende Einrichtung 16, in dem hier dargestellten Ausführungsbeispiel über zwei zu kühlende Einrichtungen 16. Den Einrichtungen 16 ist zur Kühlung ein zweiter Kühlmittelkreislauf 17 zugeordnet, der über einen zweiten Kühlmittelkühler 18 sowie eine eigene Kühlmittelpumpe 19 verfügt. Die beiden Kühlmittelkreisläufe 3 und 17 sind zunächst strömungstechnisch voneinander getrennt, können also völlig unabhängig voneinander betrieben werden, um das Antriebsaggregat 2 und/oder die zu kühlende Einrichtung 16 zu kühlen. Die beiden Kühlmittelkühler 9 und 18 sind vorzugsweise in Strömungsrichtung eines Luftstroms hintereinander angeordnet. Beispielsweise sind die Kühlmittelkühler 9 und 18 mittels eines Lüfters 20 mit einem solchen Luftstrom beaufschlagbar.

Um die Effizienz der Antriebseinrichtung 1 beziehungsweise des Antriebsaggregats 2 zu erhöhen, verfügt die Antriebseinrichtung 1 über einen Ladeluftkühler 21. Diesem ist über einen Kühlmitteleingang 22 Kühlmittel zuführbar und über einen Kühlmittelausgang 23 entnehmbar. Der Kühlmitteleingang 22 des Ladeluftkühlers 21 ist an zweites Stellventil 24 angeschlossen, welches vorzugsweise mittels eines Temperatursensors 25 temperaturgesteuert oder temperaturgeregelt ist.

Auf seiner dem Ladeluftkühler 21 strömungstechnisch abgewandten Seite ist das zweite Stellventil 24 sowohl an den ersten Kühlmittelkreislauf 3 als auch an den zweiten Kühlmittelkreislauf 17 angeschlossen. Hierzu ist das Stellventil 24 entweder unmittelbar an den ersten Kühlmittelkreislauf 3 beziehungsweise dessen Kühlmittelleitung 7 angeschlossen oder - wie hier dargestellt - an die Kühlmittelrücklaufleitung 13. An den zweiten Kühlmittelkreislauf 17 ist das zweite Stellventil 24 strömungstechnisch zwischen dem zweiten Kühlmittelkühler 18 und der zu kühlenden Einrichtung 16 angeschlossen, sodass an dem zweiten Stellventil 24 mittels des zweiten Kühlmittelkühlers 18 gekühltes Kühlmittel anliegt.

Ergänzend sei darauf hingewiesen, dass das zweite Stellventil 24 einen ersten Eingang, einen zweiten Eingang sowie einen Ausgang aufweist. Der erste Eingang ist strömungstechnisch an den ersten Kühlkreislauf 3, der zweite Eingang schaltungstechnisch an den zweiten Kühlmittelkreislauf 17 und der Ausgang strömungstechnisch an den Kühlmitteleingang 22 des Ladeluftkühlers 21 angeschlossen. Mithilfe des zweiten Stellventils 24 kann insoweit bevorzugt eine Regelung der Temperatur des dem Ladeluftkühlers 21 zugeführten Kühlmittels erfolgen. Hierzu wird beispielsweise die Temperatur strömungstechnisch zwischen dem zweiten Stellventil 24 und dem Ladeluftkühlers 21 mittels des Temperatursensors 24 gemessen.

Der Kühlmittelausgang 23 des Ladeluftkühlers 21 ist an den ersten Kühlmittelkreislauf 3 und den zweiten Kühlmittelkreislauf 17 angeschlossen. Zum Anschließen an den ersten Kühlmittelkreislauf 3 ist der Kühlmittelausgang 23 an die Kühlmittelvorlaufleitung 12 angeschlossen, beispielsweise über eine Kühlmittelleitung, welche von dem Ausgleichsbehälter 14 zu der Kühlmittelvorlaufleitung 12 verläuft. Gleichzeitig ist der Kühlmittelausgang 23 stromabwärts der zu kühlenden Einrichtung 16, jedoch stromaufwärts des zweiten Kühlmittelkühlers 18 an den zweiten Kühlmittelkreislauf 17 angeschlossen. Schlussendlich ist insoweit der Ladeluftkühler 21 strömungstechnisch parallel zu der zu kühlenden Einrichtung 16 an den zweiten Kühlmittelkreislauf 17 angeschlossen. Es kann vorgesehen sein, dass strömungstechnisch in Reihe mit dem Ladeluftkühler 21 ein Verdichtergehäusekühler 26 eines Abgasturboladers der Antriebseinrichtung 1 angeschlossen ist. Die Pfeile 27 zeigen eine Durchströmungsrichtung des Ladeluftkühlers mit der zu kühlenden Ladeluft.

Mit der hier beschriebenen Antriebseinrichtung 1 kann wahlweise anstelle einer Kühlung von dem Antriebsaggregat 2 zuzuführendem Frischgas alternativ auch ein Vorheizen desselben vorgenommen werden, sodass dem Antriebsaggregat 2 stets Frischgas zugeführt wird, welches derart temperiert ist, dass ein besonders effizientes Betreiben des Antriebsaggregats 2 und/oder einer Abgasnachbehandlungseinrichtung erfolgt.

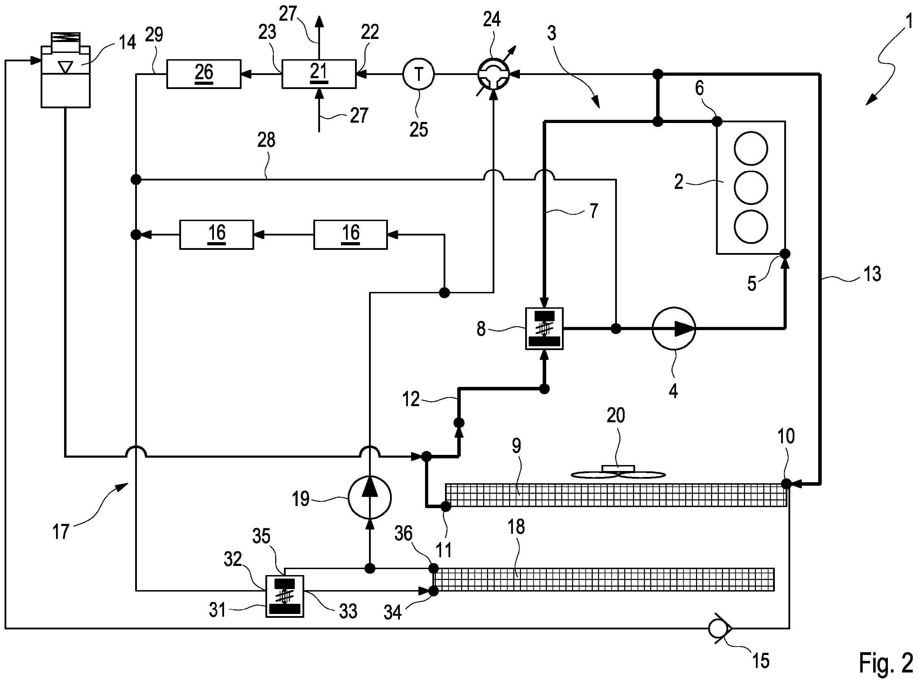

Die Figur 2 zeigt eine zweite Ausführungsform der Antriebseinrichtung 1, ebenfalls lediglich schematisch. Die zweite Ausführungsform entspricht im Wesentlichen der ersten Ausführungsform, sodass auf die Ausführung zu der ersten Ausführungsform hingewiesen und nachfolgend lediglich auf die Unterschiede eingegangen wird. Diese liegen darin, dass der Kühlmittelausgang 23 des Ladeluftkühlers 21 nicht über die Kühlmittelvorlaufleitung 12 strömungstechnisch an den ersten Kühlkreislauf 3 angeschlossen ist, sondern über eine Verbindungsleitung 28. Diese ist einerseits an den Kühlmittelausgang 23 des Ladeluftkühlers 21 und andererseits an den ersten Kühlkreislauf 3 angeschlossen.

In dem hier dargestellten Ausführungsbeispiel ist die Verbindungsleitung 28 einerseits an eine Leitung 29 angeschlossen, über welche der Kühlmittelausgang 23 an den zweiten Kühlmittelkreislauf 17 strömungstechnisch angeschlossen ist. Bevorzugt mündet die Leitung 29 zwischen der zu kühlenden Einrichtung 16 und der Kühlmittelpumpe 19 in den zweiten Kühlmittelkreislauf 17 ein. Die Verbindungsleitung 28 zweigt einerseits von der Leitung 29 ab. Andererseits mündet die Verbindungsleitung 28 in den ersten Kühlkreislauf 3 ein, nämlich vorzugsweise strömungstechnisch zwischen dem ersten Stellventil 8 und der Kühlmittelpumpe 4. Eine solche Verbindungsleitung 28 kann im Übrigen alternativ zu einer dort dargestellten Stichleitung 30 auch im Rahmen der ersten Ausführungsform der Antriebseinrichtung 1 vorliegen.

Ein weiterer Unterschied zwischen der ersten Ausführungsform und der zweiten Ausführungsform liegt darin, dass bei der zweiten Ausführungsform ein drittes Stellventil 31 vorliegt, welches in dem zweiten Kühlmittelkreislauf 17 angeordnet ist und einer Überbrückung des zweiten Kühlmittelkühlers 18 dient. Hierbei sind der Ladeluftkühlers 21 und die zu kühlende Einrichtung 16 jeweils ausgangsseitig an einen Eingang 32 des dritten Stellventils 31 strömungstechnisch angeschlossen. Ein erster Ausgang 33 ist an einen Einlass 34 des zweiten Kühlmittelkühlers 18 angeschlossen, ein zweiter Ausgang 32 an einen Auslass 36.

Bei dem hier dargestellten Ausführungsbeispiel führt dies dazu, dass der erste Ausgang 33 lediglich mittelbar über den zweiten Kühlmittelkühler 18 an die Kühlmittelpumpe 19 angeschlossen ist, wohingegen der zweite Ausgang 35 unmittelbar unter Umgehung des zweiten Kühlmittelkühlers 18 an die Kühlmittelpumpe 19 angeschlossen ist. In einer ersten Schaltstellung des dritten Schaltventils 31 liegt eine Strömungsverbindung zwischen dem Eingang 32 und dem ersten Ausgang 33 vor, eine Strömungsverbindung zwischen dem Eingang 32 und dem zweiten Ausgang 35 ist jedoch unterbrochen. In einer zweiten Schaltstellung des dritten Stellventils 31 ist hingegen die Strömungsbindung zwischen dem Eingang 32 und dem ersten Ausgang 33 unterbrochen und die Strömungsverbindung zwischen dem Eingang 32 und dem zweiten Ausgang 35 hergestellt. In der ersten Schaltstellung ist der zweite Kühlmittelkühler 18 insoweit in Betrieb, wohingegen er in der zweiten Schaltstellung umgangen wird, sodass in dem zweiten Kühlmittelkreislauf 17 vorliegendes Kühlmittel also um ihn herum geführt wird. Besonders bevorzugt weist das dritte Stellventil 31 mehrere zwischen der ersten Schaltstellung und der zweiten Schaltstellung liegende Zwischenstellungen auf, in welchen der Eingang 32 sowohl mit dem ersten Ausgang 33 als auch mit dem zweiten Ausgang 35 in Strömungsverbindung steht.

Beispielsweise wird das dritte Stellventil 31 in Abhängigkeit von einer Temperatur des Kühlmittels, insbesondere des Kühlmittels an dem Eingang 32, eingestellt. Beispielsweise wird bei einer Temperatur des Kühlmittels oberhalb einer bestimmten Schwellentemperatur die erste Schaltstellung und bei einer Temperatur von höchstens der Schwellentemperatur die zweite Schaltstellung eingestellt. Hierdurch wird ein besonders flexibler Betrieb der Antriebseinrichtung 1 realisiert. Der Vollständigkeit halber sei drauf hingewiesen, dass das dritte Stellventil 31 auch im Rahmen der ersten Ausführungsform vorliegen kann.

Das dritte Stellventil 31 liegt zum Beispiel in Form eines Thermostat, insbesondere eines passiven Thermostat, vor. Bevorzugt verfügt das Thermostat hierbei über ein Wachsdehnelement. Das dritte Stellventil 31 kann alternativ jedoch auch als aktiv geregelter Thermostat ausgeführt sein. Mithilfe des dritten Stellventils 31 können Wärmeverluste des Antriebsaggregats 2 verhindert werden, insbesondere falls der Ladeluftkühlers 21 zum Erwärmen beziehungsweise Heizen der Ladeluft verwendet werden soll.

## Patentansprüche

1. Antriebseinrichtung (1) für ein Kraftfahrzeug, mit einem Antriebsaggregat (2), einem Ladeluftkühler (21) zur Kühlung von dem Antriebsaggregat (2) zuzuführendem Frischgas, einem ersten Kühlmittelkreislauf (3) zur Kühlung des Antriebsaggregats (2) und einem unabhängig von dem ersten Kühlmittelkreislauf (3) betreibbaren zweiten Kühlmittelkreislauf (17), wobei der erste Kühlmittelkreislauf (3) an einen ersten Kühlmittelkühler (9) angeschlossen ist und der zweite Kühlmittelkreislauf (17) einen zweiten Kühlmittelkühler (18) aufweist, wobei der Ladeluftkühler (21) mit dem ersten Kühlmittelkreislauf (3) und dem zweiten Kühlmittelkreislauf (17) jeweils strömungstechnisch verbindbar ist, **dadurch gekennzeichnet, dass** der zweite Kühlmittelkreislauf (17) unabhängig von dem Ladeluftkühler (21) zur Kühlung einer zu kühlenden Einrichtung (16) betreibbar ist, und dass ein Kühlmittelausgang (23) des Ladeluftkühlers (21) an den ersten Kühlmittelkreislauf (3) und den zweiten Kühlmittelkreislauf (17) angeschlossen ist.

2. Antriebseinrichtung nach Anspruch 1, **dadurch gekennzeichnet, dass** der erste Kühlmittelkreislauf (3) über ein erstes Stellventil (8) an den ersten Kühlmittelkühler (9) angeschlossen ist, sodass dem Antriebsaggregat (2) in unterschiedlichen Betriebsarten unterschiedliche Mengen von mittels des ersten Kühlmittelkühlers (9) gekühltem Kühlmittel zuführbar ist.

3. Antriebseinrichtung nach einem der vorhergehenden Ansprüche, **dadurch gekennzeichnet, dass** ein Kühlmittelauslass (11) des ersten Kühlmittelkühlers (9) über eine Kühlmittelvorlaufleitung (12) und das erste Stellventil (8) an den ersten Kühlmittelkreislauf (3) und eine Kühlmittelrückführleitung (13) einerseits an den ersten Kühlmittelkreislauf (3) und andererseits an einen Kühlmitteleinlass (10) des ersten Kühlmittelkühlers (9) angeschlossen ist.

4. Antriebseinrichtung nach einem der vorhergehenden Ansprüche, **dadurch gekennzeichnet, dass** ein Kühlmitteleingang (22) des Ladeluftkühlers (21) über ein zweites Stellventil (24) stromabwärts des Antriebsaggregats (2) an den ersten Kühlmittelkreislauf (3) oder die Kühlmittelrückführleitung (13) und stromabwärts des zweiten Kühlmittelkühlers (18) an den zweiten Kühlmittelkreislauf (17) strömungstechnisch angeschlossen ist.

5. Antriebseinrichtung nach einem der vorhergehenden Ansprüche, **dadurch gekennzeichnet, dass** der Kühlmittelausgang (23) über eine zwischen dem ersten Stellventil (8) und einer Kühlmittelpumpe (4) des ersten Kühlmittelkreislaufs (3) in den ersten Kühlmittelkreislauf (3) einmündende Verbindungsleitung und/oder über die Kühlmittelvorlaufleitung (12) an den ersten Kühlmittelkreislauf (3) angeschlossen ist.

6. Antriebseinrichtung nach einem der vorhergehenden Ansprüche, **dadurch gekennzeichnet, dass** in dem zweiten Kühlmittelkreislauf (17) ein drittes Schaltventil zur Überbrückung des zweiten Kühlmittelkühlers (18) angeordnet ist, das eingangsseitig an den Kühlmittelausgang (23) angeschlossen ist.

7. Antriebseinrichtung nach einem der vorhergehenden Ansprüche, **dadurch gekennzeichnet, dass** der Ladeluftkühler (21) strömungstechnisch parallel zu der zu kühlenden Einrichtung (16) an den zweiten Kühlmittelkreislauf (17) angeschlossen ist.

8. Verfahren zum Betreiben einer Antriebseinrichtung (1) für ein Kraftfahrzeug, nach einem oder mehreren der vorhergehenden Ansprüche, wobei die Antriebseinrichtung (1) ein Antriebsaggregat (2), einen Ladeluftkühler (21) zur Kühlung von dem Antriebsaggregat (1) zuzuführendem Frischgas, einen ersten Kühlmittelkreislauf (3) zur Kühlung des Antriebsaggregats (1) und einen unabhängig von dem ersten Kühlmittelkreislauf (3) betreibbaren zweiten Kühlmittelkreislauf (17) aufweist, wobei der erste Kühlmittelkreislauf (3) an einen ersten Kühlmittelkühler (9) angeschlossen ist und der zweite Kühlmittelkreislauf (17) einen zweiten Kühlmittelkühler (18) aufweist, wobei der Ladeluftkühler (21) mit dem ersten Kühlmittelkreislauf (3) und dem zweiten Kühlmittelkreislauf (17) jeweils strömungstechnisch verbunden werden kann, **dadurch gekennzeichnet, dass** der zweite Kühlmittelkreislauf (17) unabhängig von dem Ladeluftkühler (21) zur Kühlung einer zu kühlenden Einrichtung (16) betreibbar ist, und dass ein Kühlmittelausgang (23) des Ladeluftkühlers (21) an den ersten Kühlmittelkreislauf (3) und den zweiten Kühlmittelkreislauf (17) angeschlossen ist.

9. Verfahren nach Anspruch 8, **dadurch gekennzeichnet, dass** der Ladeluftkühler (21) in einer ersten Betriebsart strömungstechnisch von dem ersten Kühlmittelkreislauf (3) und dem zweiten Kühlmittelkreislauf (17) entkoppelt, in einer zweiten Betriebsart von dem ersten Kühlmittelkreislauf (3) entkoppelt und mit dem zweiten Kühlmittelkreislauf (17) gekoppelt, in einer dritten Betriebsart mit dem ersten Kühlmittelkreislauf (3) gekoppelt und von dem zweiten Kühlmittelkreislauf (17) entkoppelt und in einer vierten Betriebsart sowohl mit dem ersten Kühlmittelkreislauf (3) als auch mit dem zweiten Kühlmittelkreislauf (17) gekoppelt ist, wobei aus der ersten Betriebsart, der zweiten Betriebsart, der dritten Betriebsart und der vierten Betriebsart eine Betriebsart ausgewählt und eingestellt wird.

## Claims

1. Drive device (1) for a motor vehicle, having a drive unit (2), a charge air cooler (21) for cooling fresh gas to be supplied to the drive unit (2), a first coolant circuit (3) for cooling the drive unit (2) and a second coolant circuit (17) which is operable independently of the first coolant circuit (3), wherein the first coolant circuit (3) is connected to a first coolant radiator (9) and the second coolant circuit (17) comprises a second coolant radiator (18), wherein the charge air cooler (21) is fluidically connectable to each of the first coolant circuit (3) and the second coolant circuit (17), **characterised in that** the second coolant circuit (17) is operable independently of the charge air cooler (21) for cooling a device (16) to be cooled, and **in that** a coolant outlet (23) of the charge air cooler (21) is connected to the first coolant circuit (3) and the second coolant circuit (17).

2. Drive device according to claim 1, **characterised in that** the first coolant circuit (3) is connected to the first coolant radiator (9) via a first control valve (8), so that the drive unit (2) can be supplied with different quantities of coolant cooled by means of the first coolant radiator (9) in different operating modes.

3. Drive device according to one of the preceding claims, **characterised in that** a coolant outlet (11) of the first coolant radiator (9) is connected to the first coolant circuit (3) via a coolant supply line (12) and the first control valve (8) and a coolant return line (13) is connected on the one hand to the first coolant circuit (3) and on the other hand to a coolant inlet (10) of the first coolant radiator (9).

4. Drive device according to one of the preceding claims, **characterised in that** a coolant inlet (22) of the charge air cooler (21) is fluidically connected via a second control valve (24) downstream of the drive unit (2) to the first coolant circuit (3) or the coolant return line (13) and downstream of the second coolant cooler (18) to the second coolant circuit (17).

5. Drive device according to one of the preceding claims, **characterised in that** the coolant outlet (23) is connected to the first coolant circuit (3) via a connecting line opening into the first coolant circuit (3) between the first control valve (8) and a coolant pump (4) of the first coolant circuit (3) and/or via the coolant supply line (12).

6. Drive device according to one of the preceding claims, **characterised in that** a third switching valve for bypassing the second coolant radiator (18) is arranged in the second coolant circuit (17) and is connected on the input side to the coolant outlet (23).

7. Drive device according to one of the preceding claims, **characterised in that** the charge air cooler (21) is connected to the second coolant circuit (17) fluidically parallel to the device (16) to be cooled.

8. Method for operating a drive device (1) for a motor vehicle, according to one or more of the preceding claims, wherein the drive device (1) comprises a drive unit (2), a charge air cooler (21) for cooling fresh gas to be supplied to the drive unit (1), a first coolant circuit (3) for cooling the drive unit (1) and a second coolant circuit (17) which is operable independently of the first coolant circuit (3), wherein the first coolant circuit (3) is being connected to a first coolant radiator (9) and the second coolant circuit (17) comprises a second coolant radiator (18), wherein the charge air cooler (21) is fluidically connectable to each of to the first coolant circuit (3) and the second coolant circuit (17), **characterised in that** the second coolant circuit (17) is operable independently of the charge air cooler (21) for cooling a device (16) to be cooled, and **in that** a coolant outlet (23) of the charge air cooler (21) is connected to the first coolant circuit (3) and the second coolant circuit (17).

9. Method according to claim 8, **characterized in that** the charge air cooler (21) is fluidically decoupled from the first coolant circuit (3) and the second coolant circuit (17) in a first operating mode, decoupled from the first coolant circuit (3) and coupled to the second coolant circuit (17) in a second operating mode, coupled to the first coolant circuit (3) and decoupled from the second coolant circuit (17) in a third operating mode, and coupled both to the first coolant circuit (3) and to the second coolant circuit (17) in a fourth operating mode, wherein an operating mode is selected and set from the first operating mode, the second operating mode, the third operating mode, and the fourth operating mode.

## Revendications

1. Dispositif de propulsion (1) pour un véhicule automobile, avec un groupe moteur (2), un refroidisseur d'air de suralimentation (21) pour le refroidissement du gaz frais à amener à partir du groupe moteur (2), un premier circuit de liquide de refroidissement (3) pour le refroidissement du groupe moteur (2) et un second circuit de liquide de refroidissement (17) pouvant fonctionner indépendamment du premier circuit de liquide de refroidissement (3), dans lequel le premier circuit de liquide de refroidissement (3) est raccordé à un premier refroidisseur de liquide de refroidissement (9) et le second circuit de liquide de refroidissement (17) présente un second refroidisseur de liquide de refroidissement (18), dans lequel le refroidisseur d'air de suralimentation (21) peut être relié, du point de vue de la technique des fluides, au premier circuit de liquide de refroidissement (3) et au second circuit de liquide de refroidissement (17) respectivement, **caractérisé en ce que** le second circuit de liquide de refroidissement (17) peut fonctionner indépendamment du refroidisseur d'air de suralimentation (21) pour le refroidissement d'un dispositif à refroidir (16), et **en ce qu'**une sortie de liquide de refroidissement (23) du refroidisseur d'air de suralimentation (21) est raccordée au premier circuit de liquide de refroidissement (3) et au second circuit de liquide de refroidissement (17).

2. Dispositif de propulsion selon la revendication 1, **caractérisé en ce que** le premier circuit de liquide de refroidissement (3) est raccordé au premier refroidisseur de liquide de refroidissement (9) au moyen d'une première vanne de réglage (8), de sorte que des quantités différentes de liquide de refroidissement refroidi par le premier refroidisseur de liquide de refroidissement (9) peuvent être amenées au groupe moteur (2) dans différents modes de fonctionnement.

3. Dispositif de propulsion selon l'une des revendications précédentes, **caractérisé en ce qu'**une sortie de liquide de refroidissement (11) du premier refroidisseur de liquide de refroidissement (9) est raccordée au moyen d'une conduite d'alimentation de liquide de refroidissement (12) et de la première vanne de réglage (8) au premier circuit de liquide de refroidissement (3) et une conduite de retour de liquide de refroidissement (13) est raccordée d'une part au premier circuit de liquide de refroidissement (3) et d'autre part à une entrée de liquide de refroidissement (10) du premier refroidisseur de liquide de refroidissement (9).

4. Dispositif de propulsion selon l'une des revendications précédentes, **caractérisé en ce qu'**une entrée de liquide de refroidissement (22) du refroidisseur d'air de suralimentation (21) est raccordée, du point de vue de la technique des fluides, au moyen d'une seconde vanne de réglage (24), en aval du groupe moteur (2), au premier circuit de liquide de refroidissement (3) ou à la conduite de retour de liquide de refroidissement (13) et, en aval du second refroidisseur de liquide de refroidissement (18), au second circuit de liquide de refroidissement (17).

5. Dispositif de propulsion selon l'une des revendications précédentes, **caractérisé en ce que** la sortie de liquide de refroidissement (23) est raccordée au premier circuit de liquide de refroidissement (3) au moyen d'une conduite de liaison qui débouche entre la première vanne de réglage (8) et une pompe de liquide de refroidissement (4) du premier circuit de liquide de refroidissement (3) et/ou au moyen de la conduite d'alimentation de liquide de refroidissement (12).

6. Dispositif de propulsion selon l'une des revendications précédentes, **caractérisé en ce qu'**une troisième vanne de commutation pour le pontage du second refroidisseur de liquide de refroidissement (18) est disposée dans le second circuit de liquide de refroidissement (17), ladite vanne de commutation est raccordée côté entrée à la sortie de liquide de refroidissement (23).

7. Dispositif de propulsion selon l'une des revendications précédentes, **caractérisé en ce que** le refroidisseur d'air de suralimentation (21) est raccordé, du point de vue de la technique des fluides, au second circuit de liquide de refroidissement (17) en parallèle au dispositif (16) à refroidir.

8. Procédé pour faire fonctionner un dispositif de propulsion (1) pour un véhicule automobile, selon une ou plusieurs des revendications précédentes, dans lequel le dispositif de propulsion (1) présente un groupe moteur (2), un refroidisseur d'air de suralimentation (21) pour le refroidissement du gaz frais à amener à partir du groupe moteur (1), un premier circuit de liquide de refroidissement (3) pour le refroidissement du groupe moteur (1) et un second circuit de liquide de refroidissement (17) pouvant fonctionner indépendamment du premier circuit de liquide de refroidissement (3), dans lequel le premier circuit de liquide de refroidissement (3) est raccordé à un premier refroidisseur de liquide de refroidissement (9) et dans lequel le second circuit de liquide de refroidissement (17) présente un second refroidisseur de liquide de refroidissement (18), dans lequel le refroidisseur d'air de suralimentation (21) peut être relié, du point de vue de la technique des fluides, au premier circuit de liquide de refroidissement (3) et au second circuit de liquide de refroidissement (17) respectivement, **caractérisé en ce que** le second circuit de liquide de refroidissement (17) peut fonctionner indépendamment du refroidisseur d'air de suralimentation (21) pour le refroidissement d'un dispositif (16) à refroidir, et **en ce qu'**une sortie de liquide de refroidissement (23) du refroidisseur d'air de suralimentation (21) est raccordée au premier circuit de liquide de refroidissement (3) et au second circuit de liquide de refroidissement (17).

9. Procédé selon la revendication 8, **caractérisé en ce que,** dans un premier mode de fonctionnement, le refroidisseur d'air de suralimentation (21) est, du point de vue de la technique des fluides, découplé du premier circuit de liquide de refroidissement (3) et du second circuit de liquide de refroidissement (17), dans un deuxième mode de fonctionnement, il est découplé du premier circuit de liquide de refroidissement (3) et couplé au second circuit de liquide de refroidissement (17), dans un troisième mode de fonctionnement, il est couplé au premier circuit de liquide de refroidissement (3) et découplé du second circuit de liquide de refroidissement (17), et dans un quatrième mode de fonctionnement, il est couplé à la fois au premier circuit de liquide de refroidissement (3) et au second circuit de liquide de refroidissement (17), dans lequel un mode de fonctionnement est sélectionné et réglé à partir du premier mode de fonctionnement, du deuxième mode de fonctionnement, du troisième mode de fonctionnement et du quatrième mode de fonctionnement.
